# EUROPÄISCHE PATENTSCHRIFT

(11) **EP 1 990 655 B1**
(45) Veröffentlichungstag und Bekanntmachung des Hinweises auf die Patenterteilung: **01.07.2015**
(21) Anmeldenummer: 08008407.2
(22) Anmeldetag: 05.05.2008
(51) Int. Cl.: G01S 13/92, G08G 1/054

(54) **Verfahren zur beweiskräftigen Erfassung der Geschwindigkeit eines Fahrzeuges**
Method for conclusively determining the speed of a vehicle
Procédé de détermination appuyée par des preuves de la vitesse d'un véhicule

(30) Priorität: 07.05.2007 DE 102007022373
(43) Veröffentlichungstag der Anmeldung: 12.11.2008
(73) Patentinhaber: JENOPTIK Robot GmbH, 40789 Monheim am Rhein (DE)
(72) Erfinder: Klein, Christoph Prof.Dr., 35080 Bad Endbach (DE); Behrens, Andreas, 40764 Langenfeld (DE); Dohmann, Bernhard, 40764 Langenfeld (DE); Terlau, Norbert, 51515 Kürten (DE)
(74) Vertreter: Schaller, Renate

(56) Entgegenhaltungen:
- EP-A- 0 497 093
- EP-A- 0 588 687
- EP-A- 1 610 279
- EP-B- 0 935 764
- DE-B4-102004 040 015
- US-A- 4 743 908

## Beschreibung

Die Erfindung betrifft ein Verfahren zur Erfassung der Geschwindigkeit eines Fahrzeuges sowie einer beweiskräftigen Zuordnung der erfassten Geschwindigkeit zu dem angemessenen Fahrzeug, wie es gattungsgemäß aus der Patentschrift EP 1 610 279 A1 bekannt ist.

Doppler-Radarsysteme gehören zu den Hauptmessinstrumenten für die Überwachung und Durchsetzung von gesetzlichen Geschwindigkeitsbegrenzungen für Fahrzeuge.

Damit derartige Geräte für den bestimmungsgemäßen Gebrauch zugelassen werden, muss einerseits sicher gestellt und plausibel gemacht werden, dass die gemessene Geschwindigkeit korrekt ist und andererseits muss die gemessene Geschwindigkeit dem angemessenen Fahrzeug zweifelsfrei zugeordnet werden können.

Die Erfindung betrifft ein Verfahren, welches insbesondere das Problem der zweifelsfreien Zuordnung löst, in diesem Zusammenhang aber auch die gemessene Geschwindigkeit plausibel macht.

Die Tatsache, dass es Messsituationen gibt, in denen keine zweifelsfreie Zuordnung der gemessenen Geschwindigkeit zu dem angemessenen Fahrzeug möglich ist, ist insbesondere im Prinzip der Radartechnik begründet. Die Radarstrahlung bildet üblicherweise einen Radarkegel, der sich unter einem Winkel von ca. 5 - 10° ausbreitet und entsprechend mit zunehmender Entfernung an Breite zunimmt, wodurch sich bei Anwendung auf einer mehrspurigen Fahrbahn gleichzeitig mehrere Fahrzeuge im Radarkegel (Messbereich) befinden können. Eine mehrspurige Fahrbahn besteht aus mehreren Fahrstreifen, auf denen Fahrzeuge in eine gleiche Richtung fahren.

Um ein angemessenes Fahrzeug, d. h. ein die Radarstrahlung reflektierendes Fahrzeug eindeutig zu identifizieren, d. h. das angemessene Fahrzeug in einer Gruppe von Fahrzeugen zu erkennen, wird in der EP 0 935 764 B1 vorgeschlagen, gleichzeitig mit der Geschwindigkeit auch die Entfernung zu erfassen und über die erfasste Entfernung das Fahrzeug einem Fahrstreifen (hier Fahrspur genannt) zuzuordnen.

Auch mit einem Verfahren gemäß der EP 1 610 279 A1 wird aus einer gemessenen Entfernung für ein Fahrzeug, das eine überhöhte Geschwindigkeit detektiert, auf den Fahrstreifen (auch hier voie = Fahrspur genannt) geschlossen, auf dem das Fahrzeug fährt, um es innerhalb einer Gruppe von auf einem Foto erfassten Fahrzeugen zu identifizieren.

Für die Entfernungsmessung mittels Radartechnik sind Impulsradargeräte und Radargeräte mit frequenzmodulierten Dauerradarsignalen bekannt. In beiden Fällen wird die Entfernung nicht wirklich gemessen, sondern aus anderen Messgrößen abgeleitet. Wenn also in der nachfolgenden Beschreibung von Messwerten und einer gemessenen Geschwindigkeit gesprochen wird, soll eine abgeleitete Geschwindigkeit verstanden werden. Gleiches trifft für die Entfernung und den Winkel zu.

Impulsradargeräte ermitteln die Entfernung über eine Laufzeitmessung und erfordern eine hochgenaue Zeitmessung, um die Entfernung, d. h. den radialen Abstand von reflektierenden Fahrzeugteilen zur Radarantenne zu messen. Eine Auflösung einer Distanz von z. B. einem Meter erfordert eine Zeitauflösung von 3,33 ns. Eine Ablaufsteuerung des Messvorgangs erfordert daher für hohe Auflösungen extreme technische Aufwände.

Mit Dauerradargeräten erfolgt die Ermittlung der Entfernung aus der Phasendifferenz reflektierter Radarsignale unterschiedlicher Frequenz.

Bekanntermaßen wird mit einem Dauerradargerät eine in Amplitude und Frequenz konstante Dauerradarstrahlung ausgesendet. Bei der Reflexion an einem bewegten Objekt, sprich einem Fahrzeug, erfährt diese Radarstrahlung eine in Abhängigkeit von der Geschwindigkeit des Fahrzeuges abhängige Frequenzverschiebung. Der in das Radargerät bzw. auf die Radarantenne zurückreflektierte Strahlungsanteil wird mit der ausgesendeten Radarstrahlung verglichen und eine Frequenzdifferenz, die sogenannte Dopplerfrequenz gebildet, die zu der Geschwindigkeit des Fahrzeuges proportional ist.

Mit der Ausstrahlung einer Radarstrahlung in verschiedenen Frequenzen erhält man frequenzverschobene Reflektionsstrahlungen, aus deren Phasendifferenz die Entfernung abgeleitet wird. Die Geschwindigkeit und die Entfernung werden somit über einen gemeinsamen Messvorgang ermittelt, womit eine eineindeutige Zuordnung der Messwerte zueinander gesichert ist.

Im Unterschied zur Geschwindigkeitsmessung, die mit dem Doppler-Radar-Prinzip sehr genau gemessen werden kann, ist die Schwankungsbreite der Entfernungsmesswerte sehr groß. Die Punktreflexionen, die von einem Fahrzeug zur Radarantenne gelangen, erstrecken sich auf die gesamte Fahrzeugkontur, auf die der Radarquerschnitt projiziert wird. Der auf ein durch den Radarkegel fahrendes Fahrzeug projizierte Radarquerschnitt ändert sich in Abhängigkeit von der jeweiligen Geometrie des Fahrzeuges sowie seiner Position im Radarkegel, beginnend vom Eintritt in bis hin zum Austritt aus dem Radarkegel. Durch den Empfänger wird zu jedem Messzeitpunkt eine Summe von Messwerten (Messwertschar) aus Partialreflexionen detektiert. Statistisch wird diese Summe zusammen mit anderen parasitär wirkenden Reflektoren wie Leitplanken oder Metallzäunen im Regelfall als Rayleigh-Verteilung empfangen. Es werden Entfernungen gemessen, welche in der Größenordnung der Fahrbahnbreite und der Fahrzeugabmaße streuen.

Eine eindeutige Identifikation eines Fahrzeuges in einer Gruppe von Fahrzeugen nur an Hand von einzelnen Entfernungsmesswerten, die einem Fahrstreifen zugeordnet werden, ist aufgrund der potentiellen Mehrdeutigkeiten infolge des unterschiedlichen Reflexionsverhaltens der Fahrzeuge und möglichen Mehrfachreflexionen nicht sicher möglich.

Selbst wenn zu jedem Messzeitpunkt aus der Summe der Messwerte ein Mittelwert gebildet wird, kann dieser Mittelwert nicht in jedem Fall eindeutig einem Fahrstreifen zugeordnet werden.

Gleiches trifft auch dann zu, wenn Messwerte außerhalb einer vorgegebenen Toleranzbreite ignoriert werden und der Mittelwert nur aus den verbleibenden Messwerten gebildet wird. Auch wenn hiermit eine Verfälschung des gemittelten Entfernungswertes in Folge von Partialreflexionen an parasitär wirkenden Reflektoren ausgeschlossen wird, ist nicht für jede Messsituation eine Identifikation anhand des gemittelten Entfernungswertes und dessen Zuordnung zu einem Fahrstreifen möglich.

Das Radargerät müsste zwingend in einem solchen spitzen Winkel zur Fahrbahn ausgerichtet werden, dass alle denkbaren Entfernungsmesswerte eindeutig nur jeweils einem Fahrstreifen zugeordnet werden können. Da die Fahrzeuge aufgrund der Breite des Radarkegels zwingend einen bestimmten Entfernungsbereich durchfahren, dürfen sich diese Entfernungsbereiche für zwei Fahrzeuge, die voneinander unterschieden werden sollen, nicht überlappen. Die Entfernungsbereiche verschieben sich jedoch, wenn die Fahrzeuge nicht ideal in der Mitte des Fahrstreifens fahren und sie kommen in jedem Fall zur Überlappung, wenn ein Fahrzeug im Messbereich den Fahrstreifen wechselt.

Dadurch entstehen Messsituationen, in denen ein Fahrzeug nicht eindeutig einem Fahrstreifen zugeordnet werden kann, womit der Fahrstreifen kein sicheres Merkmal zur Identifikation eines Fahrzeuges in einer Gruppe von Fahrzeugen darstellt.

Der Erfindung liegt die Aufgabe zu Grunde, ein Verfahren zu schaffen, in dem unabhängig von Merkmalen der Fahrbahn oder anderen Umgebungsmerkmalen ein angemessenes Fahrzeug in einer Gruppe von Fahrzeugen unterschieden werden kann.

Diese Aufgabe wird durch ein Verfahren mit den Merkmalen des Anspruches 1 gelöst.

Vorteilhafte Weiterbildungen sind in den Unteransprüchen beschrieben.

Die Erfindung soll nachfolgend beispielhaft anhand von Zeichnungen näher erläutert werden.

Es zeigen:
Fig. 1 eine Messsituation bei Anordnung eines Radargerätes neben der Fahrbahn
Fig. 2 eine Messsituation bei Anordnung eines Radargerätes oberhalb der Fahrbahn

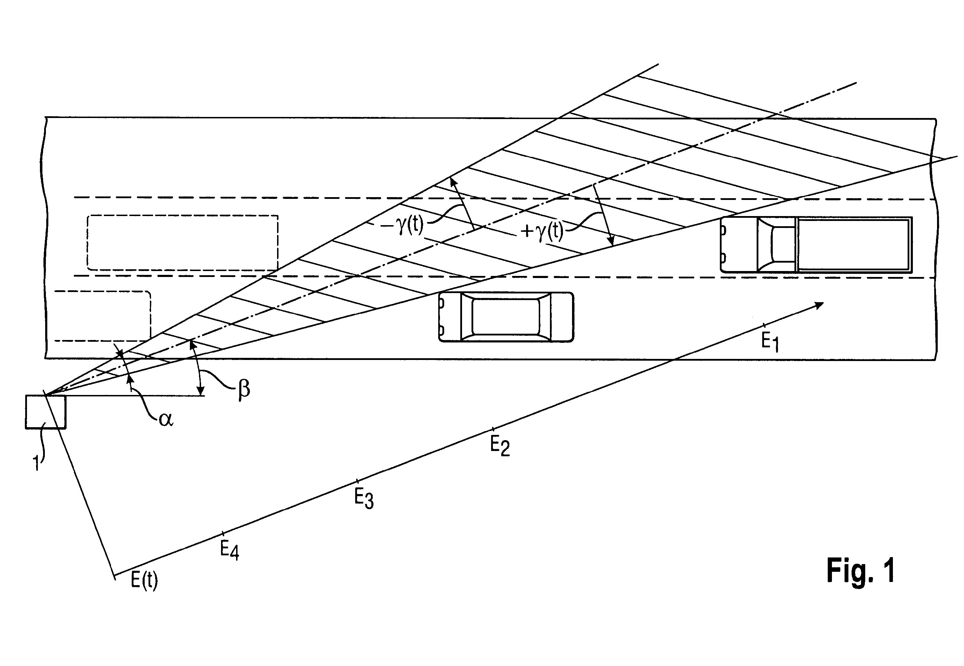

Zur Beschreibung eines ersten Ausführungsbeispiels an Hand von Fig. 1 soll davon ausgegangen werden, dass ein Radargerät 1, das eine Radarstrahlung mit einem Öffnungswinkel α aussendet, neben der Fahrbahn unter einem spitzen horizontalen Aufstellwinkel β der Radarachse zur Fahrbahnrichtung neben einer Fahrbahn mit mehreren Fahrstreifen positioniert ist. Der Aufstellwinkel β kann auch durch einen Schielwinkel der Radarantenne gebildet werden.

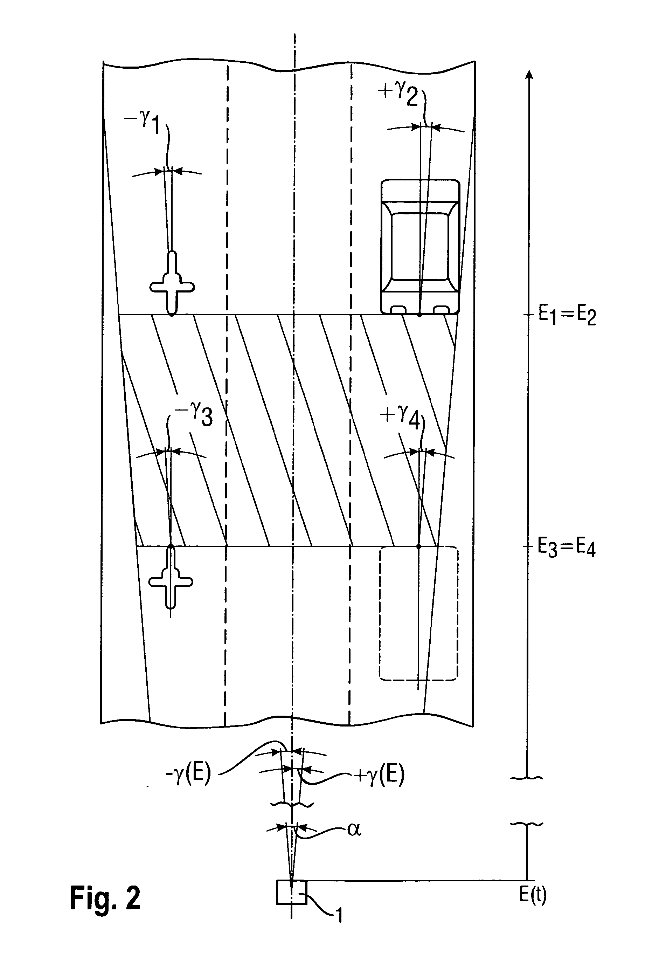

Das Radargerät 1 könnte auch gemäß einem zweiten Ausführungsbeispiel, wie in Fig. 2 dargestellt, oberhalb der Fahrbahn z. B. an einer Brücke befestigt sein, wobei hier horizontal betrachtet die Radarachse mit der Fahrbahnrichtung zusammenfällt.

Diese beiden grundsätzlich unterschiedlichen Anordnungen des Radargerätes 1 haben auf die Messung der Geschwindigkeit mittels des Doppler-Prinzips kaum eine Auswirkung, sind jedoch bezüglich der Möglichkeit der Identifikation eines Fahrzeuges anhand seiner radialen Entfernung E vom Radargerät 1 von wesentlichem Unterschied.

Bei einer Anordnung am Fahrbahnrand gemäß Fig. 1 durchfahren Fahrzeuge, die nicht eine identische Fahrzeugspur beschreiben, unterschiedliche Entfernungsbereiche. Die Entfernungsbereiche können sich überlappen, weshalb eine eindeutige Identifikation anhand nur eines Entfernungswertes nicht immer sicher möglich ist. Erst durch die Erfassung einer Folge von Entfernungswerten, die den gesamten Entfernungsbereich beschreibt, den das Fahrzeug durchfährt, ist eine eindeutige Zuordnung möglich.

Wenn das Radargerät 1 oberhalb der Fahrbahn montiert ist, gemäß Fig. 2, durchfahren alle Fahrzeuge im Wesentlichen den gleichen Entfernungsbereich. Weder einzelne Entfernungswerte noch eine Folge von Entfernungen, die den gesamten Entfernungsbereich beschreiben, können für diesen Anwendungsfall ein Unterscheidungskriterium sein.

Erst mit Hilfe der Erfassung auch des Messwinkels γ, den ein vom Fahrzeug reflektierter Strahlungsanteil mit der Radarachse einschließt, ist im zweit genannten Anwendungsfall eine Unterscheidung überhaupt möglich, indem nämlich mittels Winkel und Entfernung eine Position im Radarkegel ermittelt wird und die Position als Unterscheidungskriterium dient.

In der EP 0 935 764 B1 wird zwar von der Ableitung der Position gesprochen, gemeint ist hier aber die Ableitung der Entfernung.

Wie erläutert, ist die Kenntnis der Entfernung nicht ausreichend, um im Radarkegel eine Position zu definieren, da eine gleiche Entfernung für alle Messpunkte zutrifft, die gemeinsam auf einem Kreisbogen im Öffnungswinkel der Radarkeule liegen.

Gemäß dem ersten Ausführungsbeispiel ist die Radarachse des Radargerätes 1 zur Fahrbahnrichtung in einem spitzen Aufstellwinkel β von beispielsweise 20° zur Fahrbahnrichtung ausgerichtet. Bei einem üblichen Öffnungswinkel α der Radarkeule von 5° - 10°, z. B. bei einem Fahrzeugeinbau üblichen Abstand des Radargerätes 1 vom Straßenrand von 2 m und einer üblichen Fahrstreifenbreite von 3 m, durchfährt beispielsweise ein erstes Fahrzeug, welches mittig auf einem ersten Fahrstreifen in den Radarkegel ein- und austritt einen Entfernungsbereich von ca. 5 m bis 30 m und ein zweites Fahrzeug, welches mittig des zweiten Fahrstreifens in den Radarkegel ein- und austritt einen Entfernungsbereich von ca. 25 m bis 50 m. Mit dem jeweiligen Eintreten der Fahrzeuge in den Radarkegel (Messbereich), was in der Regel zu einem unterschiedlichen Zeitpunkt erfolgt, hier t1 und t2, werden über die kontinuierliche Messung der Reflexionssignale, verursacht an den einzelnen Fahrzeugen, deren Geschwindigkeit v und deren radialer Abstand (Entfernung E) und der Winkel zur Radarachse bestimmt.

Die kontinuierliche Geschwindigkeitsmessung bzw. die Entfernungsmessung erfolgen, wie bereits beschrieben, durch Ausnutzung des Dopplerradareffektes bzw. dem Frequenzumtastungsprinzip (FSK) in Auswertung der Phasendifferenz reflektierter Radarsignale unterschiedlicher Frequenz.

Gemäß der Darstellung in Fig. 1 tritt ein auf einem, zum Radargerät 1 hin nächsten, ersten Fahrstreifen fahrendes Fahrzeug zum Zeitpunkt t2 in den Radarkegel ein und verlässt diesen zum Zeitpunkt t4. Die zu den beiden Zeitpunkten t2, t4 gemessenen Entfernungen E2 und E4 begrenzen den Entfernungsbereich E4 - E2, über den das erste Fahrzeug den Radarkegel durchfährt. Entsprechend wird durch die Entfernungswerte E1 und E3 der Entfernungsbereich (E3 - E1) begrenzt, den ein zweites Fahrzeug auf einem zweiten Fahrstreifen durchfährt. Es ist deutlich sichtbar, dass sich die Entfernungsbereiche überlappen, d. h. Entfernungen im Überlappungsbereich sind allein betrachtet nicht geeignet, um sie einem der beiden Fahrzeuge eindeutig zuzuordnen. Durch die Zuordnung der Entfernungswerte zu dem hierzu ermittelten Messwinkel γ wird die Entfernung einer bestimmten Position zugeordnet, die jeweils nur ein Fahrzeug einnehmen kann. Zwar durchfahren die Fahrzeuge den gleichen Messwinkelbereich, jedoch werden gleiche Messwinkel γ niemals gleichen Entfernungen unterschiedlicher Fahrzeuge zugeordnet.

Die Winkelmessung erfolgt z. B. mittels zweier Empfangsantennen über eine Triangulationsmessung. Hierzu kann eine Planarantenne gemäß der DE 10 2004 040 015 B4 verwendet werden.

Wichtiger ist die Winkelerfassung für das zweite Ausführungsbeispiel.

Wie in Fig. 2 aufgezeigt, durchfahren zwei nebeneinander fahrende Fahrzeuge zwar einen im Wesentlichen gleichen Entfernungsbereich E1 - E3 bzw. E2 - E4, sie durchfahren jedoch unterschiedliche, sich nicht überlappende Winkelbereiche. Die Winkelbereiche werden begrenzt durch den Messwinkel -γ1 bzw. +γ2 bei Eintritt in den Radarkegel zum Zeitpunkt t1 bzw. t2 und durch den Messwinkel -γ3 bzw. +γ4 bei Austritt aus dem Radarkegel zum Zeitpunkt t3 bzw. t4. Dabei ist γ eine Funktion von der Entfernung E und wird vorzeichenbehaftet erkannt.

Da die Geschwindigkeit, die Entfernung und der Winkel aus einer Messung abgeleitet werden, können die Messwerte zueinander eineindeutig zugeordnet werden.

Bei jedem Messvorgang entsteht somit für jedes Fahrzeug im Radarkegel ein Wertetripel aus Geschwindigkeit, Entfernung und Winkel (E(t); V(t); γ(t)), wobei die einzelnen Werte z. B. durch Mittelwertbildung aus einer Messwertschar von Partialreflexionen nach einer Rayleighverteilung gebildet werden, wie sie insbesondere für die Entfernung und den Winkel entstehen.

Mit der permanenten Wiederholung des Messvorgangs (Tracking-Algorithmus) werden die Wertetripel kontinuierlich auf ihre Plausibilität geprüft, indem die Istwerte mit Sollwerten verglichen werden. Die Sollwerte ergeben sich aus der Annahme, dass ein Fahrzeug bei konstanter Geschwindigkeit die Fahrtrichtung unverändert beibehält und dem Wissen um den zeitlichen Abstand der Messvorgänge. Dabei werden Einzelmesswerte, die nicht plausibel erscheinen, d. h. Geschwindigkeiten, Entfernungen oder Winkel, die einem angemessenen Fahrzeug zum nächsten Messzeitpunkt unmöglich zugeordnet werden können, z. B. entstehend durch Mehrfachreflexionen oder Reflexionen an stehenden Objekten, herausgefiltert, d. h. sie nehmen nicht an einer Mittelwertbildung teil. Über eine permanente Anpassung der Sollwerte an die Istwerte wird für die einzelnen Fahrzeuge jeweils eine Aufeinanderfolge von Wertetripeln gewonnen, welche die Fahrzeugspur, die das betreffende Fahrzeug beschreibt, repräsentieren.

Die Aufeinanderfolge von Wertetripeln repräsentiert jedoch nicht nur die Relativlage einer Fahrzeugspur zum Radargerät 1, sondern auch die Geschwindigkeit des Fahrzeuges in jedem Punkt auf der Fahrzeugspur.

Die Messungen erfolgen über einen Zeitraum von ca. 100 ms bis hin zu einigen Sekunden, je nach Fahrzeuggeschwindigkeit zwischen Eintritt in und Austritt aus dem Radarkegel z. B. in einem Abstand von 20 ms, wodurch die Fahrzeugspuren mit einer hohen Genauigkeit bestimmt werden können.

Die vom Radarsensor ermittelten Aufeinanderfolgen von Wertetripeln werden jeweils einer Fahrzeugnummer (hier ist nicht dessen Kennzeichen gemeint), einer Eintrittszeit und einer Austrittszeit zugeordnet, einem Rechner zugeführt. Sollte während der Messung eine Geschwindigkeit detektiert worden sein, die oberhalb einer vorgegebenen Grenzgeschwindigkeit liegt, ermittelt der Rechner die Fahrzeugspur des betreffenden Verstoßfahrzeuges und gibt ein Signal an eine Kamera zur Erstellung einer Abbildung der Verkehrsszene. Die Kamera ist in einem bekannten festen Abstand zum Radargerät 1 so angeordnet, dass die optische Achse in fester Winkelbeziehung zur Radarachse ausgerichtet ist.

Da das Objektfeld der Kamera über alle Fahrstreifen reicht, über die auch der Radarkegel gerichtet ist, können auch alle Fahrzeuge in der Aufzeichnung abgebildet sein, die sich zum Zeitpunkt des Auslösens der Kamera (Fotopunkt) im Radarkegel befinden.

Um nun das Verstoßfahrzeug in der Abbildung eindeutig zu identifizieren, wird die vom Verstoßfahrzeug erfasste Fahrzeugspur in die Abbildung eingeblendet. Die Einblendung erfolgt vorteilhaft so, dass eine die Fahrzeugspur darstellende Markierung über die Bildpunkte in der Abbildung eingeblendet wird, die den über die Entfernung und den Winkel definierten Positionen, welche gemeinsam die Fahrspur bilden, im Objektfeld zuzuordnen sind. D. h. die Identifikation erfolgt allein anhand der zum Radargerät 1 relativ gemessenen Fahrzeugspur ohne absoluten Bezug auf einzelne Fahrstreifen der Fahrbahn.

Die Herstellung eines absoluten Bezuges zur Umgebung zwecks Identifikation ist grundsätzlich auch nicht sinnvoll, da dies voraussetzt, dass jeweils nur ein Fahrzeug im Messbereich dem Identifikationsmerkmal zugeordnet werden kann. Auch die einzelnen Fahrstreifen sind, wie bereits erläutert, nicht in jeder Messsituation als Identifikationsmerkmal geeignet, da ein Fahrzeug nicht immer eindeutig einem Fahrstreifen und auch nicht eindeutig immer nur ein Fahrzeug einem Fahrstreifen zugeordnet werden kann, wenn z. B. ein Lkw hinter einem Motorrad fährt.

Eine Identifikation der Fahrzeuge über deren relative Position zum Radargerät 1 bzw. deren relative Position zueinander könnte ein eindeutiges Unterscheidungsmerkmal sein, wenn diese Positionen über eine Punktmessung, z. B. mittels Laser, exakt bestimmt werden würden. Da eine solche genaue Messung mit der Radartechnik nicht möglich ist, wird erfindungsgemäß vorgeschlagen, die Fahrzeugspur, d. h. die zeitliche Abfolge nacheinander erfasster Positionen als Unterscheidungskriterium zu erfassen.

Für die Identifikation ist es grundsätzlich nicht notwendig, die Fahrzeugspur in die Abbildung einzublenden. Bereits in der Auswertung der aufgenommenen Abbildung bzw. der Bilddaten gemeinsam mit den aufgezeichneten Radardaten kann eine sichere Erkennung des Verstoßfahrzeuges in einer Gruppe von Fahrzeugen erfolgen. Aus der Relativlage der erfassten Fahrzeugspuren zueinander, die z. B. gemäß dem ersten Ausführungsbeispiel auf einem ersten und einem zweiten Fahrstreifen fahren und der Kenntnis der Ausrichtung der Radarachse zur optischen Achse der Kamera, lässt sich sicher schließen, welche Fahrzeugspur welchem abgebildeten Fahrzeug zuzuordnen ist. So ist entsprechend der Darstellung, bei dem das Radargerät 1 rechts zum ankommenden Verkehr positioniert ist, das Fahrzeug mit den geringeren Entfernungswerten zweifelsfrei das in der Abbildung rechts erscheinende Fahrzeug.

Bei Anwendung des Verfahrens gemäß dem zweiten Ausführungsbeispiel mit einem Radargerät 1 oberhalb der Fahrbahn montiert, ist jeweils das Fahrzeug, für welches ein permanent größerer absoluter Winkel gemessen wird, das näher zum Bildrand hin abgebildete Fahrzeug. Fahrzeuge, für die ein positiver Messwinkel γ ermittelt wurde, befinden sich in der rechten Hälfte der Abbildung, während die mit negativem Messwinkel γ in der linken Hälfte der Abbildung erscheinen.

Für die Praxis relevanter ist jedoch eine visuell sichtbare Beweisführung in der Abbildung selbst, weshalb eine Einblendung der Fahrzeugspur in die Abbildung von Vorteil ist.

Hierauf soll im Anschluss an die Beschreibung eines dritten Ausführungsbeispiels näher eingegangen werden.

In einem dritten Ausführungsbeispiel soll eine einfachere Variante eines Radargerätes 1 genutzt werden können, die es erlaubt, zusätzlich zur Geschwindigkeit v auch die Entfernung E, nicht jedoch den Messwinkel γ, zu den Messzeitpunkten zu erfassen, d. h. gegenüber dem ersten Ausführungsbeispiel fehlt der Schritt der Winkelmessungen.

Auch ohne die Erfassung des Winkels ist es möglich, für eingeschränkte Anwendungen allein durch die Entfernungsmessung über die Dauer der Durchfahrt des Fahrzeuges durch den Radarkegel Daten zu erhalten, die es erlauben, mehrere Fahrzeuge durch ihre Relativposition zueinander bzw. zum Radargerät zu unterscheiden.

Wie bereits erläutert, wird grundsätzlich zu einem Messzeitpunkt eine Messwertschar von Entfernungen detektiert, die je nach der Projektion der Radarstrahlung auf ein Fahrzeug und der Kontur des Fahrzeuges eine Streuungsbreite haben, die sich auch über die Dauer der Durchfahrt durch die Änderung der Relativlage des Fahrzeuges zum Radargerät 1 ändert. Demzufolge sind weder einzelne Messwerte der Messwertschar, noch ein aus ihnen ermittelter Mittelwert zur sicheren Unterscheidung geeignet.

Gemäß der Erfindung werden aus den Messwerten aufeinanderfolgender Messzeitpunkte z. B. über eine Regressionsanalyse oder Kurvenanpassung an die Trajektorien die Messwerte zu einzelnen Fahrzeugspuren zusammengeführt, dabei werden Messwerte, die nicht zweifelsfrei einer Fahrzeugspur zugeordnet werden können, eliminiert. Die Qualität der Approximation der Kurven, welche die Fahrzeugspuren beschreiben, nimmt über die Anzahl der Messvorgänge zu, womit auch die Zuverlässigkeit der Messergebnisse zunimmt, obwohl die Messwerte bei den kontinuierlichen Messungen gemäß der Erfindung natürlich ebenso breit gestreut sind wie bei einer Einzelmessung. D. h. gegenüber einer einmalig erfassten Entfernung sind die mehrmalig erfassten Entfernungen, die während der Durchfahrt durch den Messbereich erfasst werden, aussagekräftiger.

Ein Verfahren gemäß dem dritten Ausführungsbeispiel ist beschränkt auf Messsituationen, in der das Radargerät 1 in einem spitzen Aufstellwinkel β zur Fahrbahn ausgerichtet ist oder die Antenne einen Schielwinkel β hat.

Zusätzlich zu den Entfernungswerten E, die während der Durchfahrt erfasst werden, sind insbesondere die gemessenen Entfernungen E beim Ein- und beim Austritt entscheidungsrelevant für eine Identifikation. Zu diesen beiden Zeitpunkten ist nicht nur die Entfernung, sondern auch der Messwinkel γ bekannt, der hier Aufstellwinkel β + / - jeweils dem halben Öffnungswinkel α des Radarkegels entspricht.

Gemäß einem vierten Ausführungsbeispiel soll die Charakterisierung der Fahrzeugspur nur anhand der Messwerte für die Messwinkel γ erfolgen, d. h. anstelle der Entfernungen gemäß dem dritten Ausführungsbeispiel dienen die Messwinkel zur Bestimmung der Fahrzeugspur.

Eine solche Ausführung ist nur möglich bei einer Positionierung des Radargerätes 1 oberhalb der Fahrbahn, wobei die Radarachse (Hauptachse) in Richtung der Fahrbahn ausgerichtet ist. Die Fahrzeuge treten, je nachdem in welchem Abstand die Fahrzeugspur senkrecht zur Radarachse verläuft, unter einem Messwinkel γ mit einem unterschiedlichen Absolutbetrag in den Radarkegel ein. Im Vorzeichen unterscheiden sich die Messwinkel γ je nach dem, ob sie sich in Strahlungsrichtung rechts oder links der Radarachse befinden.

Bei ankommendem Verkehr wird der Messwinkel γ jeweils nur unerheblich größer. In jedem Fall ist jeder Messwinkelbereich, der jeweils durch einen Messwinkel γ bei Ein- und Austritt aus dem Messbereich begrenzt wird, nur jeweils einem Fahrzeug zuordenbar.

Mit einem Verfahren gemäß dem dritten oder vierten Ausführungsbeispiel werden nicht alle Daten ermittelt, die die Fahrzeugspur in ihrer Relativlage zum Radargerät 1 charakterisieren, wie das beim ersten Ausführungsbeispiel der Fall ist. Es werden lediglich Daten ermittelt, die die Fahrzeugspur hinreichend charakterisieren, um sie als Identifikationsmerkmal verwenden zu können. Eine Vorrichtung zur Durchführung des Verfahrens kann auf diese Weise einfacher und preiswerter ausgeführt werden.

Über das Verfolgen des Fahrzeuges über seinen gesamten Fahrweg durch den Messbereich werden nicht nur die Fahrzeugspur charakterisierende Messdaten erfasst, sondern es werden auch die Geschwindigkeitsmessung, die Entfernungsmessung und gegebenenfalls die Winkelmessung mehrfach plausibel gemacht.

Nachfolgend sollen verschiedene Möglichkeiten aufgezeigt werden, mit denen die ermittelten Messwerte in der Kameraabbildung (Beweisfoto) dargestellt werden.

Die aufgezeichneten Messwerte, die gemeinsam die Fahrzeugspur des Verletzerfahrzeuges charakterisieren, können in Form von Bildpunkten z. B. durch Punkte, Kreuze, Dreiecke o. ä. oder in Form einer Linie, Tubus, Fläche o. ä. eingeblendet werden. Die Einblendung kann durch farbige Gestaltung oder durch Aufhellen bzw. Abdunkeln der entsprechenden Bildbereiche erfolgen. Um die eigentlichen Messwerte kann auch ein Toleranzbereich angeben sein.

Das Verletzerfahrzeug kann auch markiert werden, z. B. durch das Einblenden einer Schablone, eines Markierungszeichens oder durch die Abdunkelung der das Verletzerfahrzeug umgebenden Bildbereiche.

Es kann der Winkelbereich, den das Verletzerfahrzeug durchfahren hat, angegeben werden, was insbesondere für Anwendungsfälle wirkungsvoll ist, in denen die Fahrzeuge im Wesentlichen über gleiche Entfernungsbereiche den Messbereich durchfahren. Ebenso kann der Entfernungsbereich, den das Verletzerfahrzeug durchfahren hat, durch Einblenden eines Kreisringsegments angegeben werden.

Neben den üblichen Daten, die für eine Beweiskraft der Aufnahme eingeblendet werden können, wie Datum, Ort, Uhrzeit, gemessene Geschwindigkeit, zuzurechnende Geschwindigkeit (gleich gemessene Geschwindigkeit abzüglich einer Toleranz), Geschwindigkeitsdifferenz der zuzurechnenden Geschwindigkeit zur zulässigen Höchstgeschwindigkeit sowie Daten zur Identifikation des Messgerätes, kann die Abbildung in einem unwichtigen Bildbereich durch einen extrahierten und eventuell vergrößertem Bildbestandteil des Fahrers und/oder des Kennzeichens des Verletzerfahrzeuges überblendet werden.

Es können auch eine aus den Messwerten ermittelte Fahrzeuglänge und/oder Fahrzeugbreite eingeblendet werden, was als zusätzlicher Beweis verwendet werden kann, wenn am Ort der Messung für unterschiedliche Fahrzeuge, z. B. einerseits Pkw und andererseits Lkws und Busse, unterschiedliche Tempolimits gelten.

Es können während der Durchfahrt des Verletzerfahrzeuges ein oder auch mehrere Beweisfotos erstellt werden.

## Patentansprüche

1. Verfahren zur Messung der Geschwindigkeit eines Fahrzeuges, bei dem
- ein Radargerät (1) eine Radarstrahlung so auf eine Fahrbahn richtet, dass gleichzeitig mehrere Fahrzeuge in einem durch die Radarstrahlung definierten Messbereich fahren können,
- ein Teil der Radarstrahlung von wenigstens einem Fahrzeug reflektiert wird,
- der reflektierte Strahlungsanteil mit der auf die Fahrbahn gerichteten Radarstrahlung verglichen wird,
- aus dem Vergleich den Fahrzeugen zugeordnete Messwerte für die Geschwindigkeit und die Entfernung (E) zum Radargerät (1) abgeleitet werden,
- die abgeleiteten Geschwindigkeiten mit einer maximal zulässigen Geschwindigkeit verglichen werden,
- eine Kamera zur Erstellung einer Abbildung aktiviert wird, wenn eine abgeleitete Geschwindigkeit größer der maximal zulässigen Geschwindigkeit ist, wobei die abgeleitete Geschwindigkeit und das Fahrzeug, für welches die überhöhte Geschwindigkeit abgeleitet wurde, in der Abbildung enthalten sind,
- die Messwerte mehrfach kontinuierlich über die Dauer der Durchfahrt der Fahrzeuge durch den Messbereich abgeleitet werden,
- mittels nachfolgend abgeleiteter Messwerte auf die Plausibilität vorheriger Messwerte geschlossen wird,
**dadurch gekennzeichnet, dass**
- die Messwerte für die Entfernungen (E) zur Charakterisierung der Fahrzeugspuren der reflektierenden Fahrzeuge bezogen auf den Abstand zum Radargerät (1) verwendet werden,
- die Fahrzeugspur des Fahrzeuges in der Abbildung, diesem zugeordnet, markiert wird, für welches die überhöhte Geschwindigkeit abgeleitet wurde.

2. Verfahren zur Messung der Geschwindigkeit eines Fahrzeuges, bei dem
- ein Radargerät (1) eine Radarstrahlung so auf eine Fahrbahn richtet, dass gleichzeitig mehrere Fahrzeuge in einem durch die Radarstrahlung definierten Messbereich fahren können,
- ein Teil der Radarstrahlung von wenigstens einem Fahrzeug reflektiert wird,
- der reflektierte Strahlungsanteil mit der auf die Fahrbahn gerichteten Radarstrahlung verglichen wird,
- aus dem Vergleich den Fahrzeugen zugeordnete Messwerte für die Geschwindigkeit abgeleitet werden,
- die abgeleiteten Geschwindigkeiten mit einer maximal zulässigen Geschwindigkeit verglichen werden,
- eine Kamera zur Erstellung einer Abbildung aktiviert wird, wenn eine abgeleitete Geschwindigkeit größer der maximal zulässigen Geschwindigkeit ist, wobei die abgeleitete Geschwindigkeit und das Fahrzeug, für welches die überhöhte Geschwindigkeit abgeleitet wurde, in der Abbildung enthalten sind
**dadurch gekennzeichnet, dass**
- zusätzlich Messwerte für Messwinkel (γ) abgeleitet werden,
- die Messwerte mehrfach kontinuierlich über die Dauer der Durchfahrt der Fahrzeuge durch den Messbereich abgeleitet werden,
- mittels nachfolgend abgeleiteter Messwerte auf die Plausibilität vorheriger Messwerte geschlossen wird,
- die Messwerte für die Messwinkel (γ) zur Charakterisierung der Fahrzeugspuren der reflektierenden Fahrzeuge bezogen auf den Hauptstrahl des Radargerätes (1) verwendet werden,
- die Fahrzeugspur des Fahrzeuges in der Abbildung, diesem zugeordnet, markiert wird, für welches die überhöhte Geschwindigkeit abgeleitet wurde.

3. Verfahren nach Anspruch 1, **dadurch gekennzeichnet,**
**dass** aus dem Vergleich auch Messwerte für Messwinkel (γ) abgeleitet werden und die mehrfach abgeleiteten Messwerte für die Messwinkel (γ) gemeinsam mit den jeweils zeitgleich abgeleiteten Messwerten für die Geschwindigkeit und die Entfernung ein Wertetripel bilden, mittels denen die Fahrzeugspur bezogen auf ihre Lage zum Radargerät (1) bestimmt wird.

4. Verfahren nach Anspruch 2, **dadurch gekennzeichnet,**
**dass** aus dem Vergleich auch Messwerte für Entfernungen abgeleitet werden und die mehrfach abgeleiteten Messwerte für die Entfernung (E) gemeinsam mit den jeweils zeitgleich abgeleiteten Messwerten für die Geschwindigkeit und die Messwinkel (γ) ein Wertetripel bilden, mittels denen die Fahrzeugspur bezogen auf ihre Lage zum Radargerät (1) bestimmt wird.

5. Verfahren nach Anspruch 2 oder 3, **dadurch gekennzeichnet,**
**dass** der reflektierte Strahlungsanteil jeweils anteilig von zwei Radarantennen empfangen wird und der Messwinkel (γ) über daraus unterschiedlich abgeleitete Entfernungen (E) mittels Triangulationsverfahren bestimmt wird.

6. Verfahren nach einem der Ansprüche 1 bis 2, **dadurch gekennzeichnet,**
**dass** Messwerte, die nicht als plausibel bestätigt werden, eliminiert und nicht zur Charakterisierung bzw. zur Bestimmung der Fahrzeugspur verwendet werden.

7. Verfahren nach Anspruch 3 oder 5, **dadurch gekennzeichnet,**
**dass** die Charakterisierung bzw. die Bestimmung der einzelnen Fahrzeugspuren bezogen auf ihre Relativlage zueinander erfolgt, um die Fahrzeuge untereinander zu unterscheiden.

8. Verfahren nach Anspruch 1 oder 3, **dadurch gekennzeichnet,**
**dass** das Verletzerfahrzeug in der Abbildung markiert wird, indem eine die Fahrzeugspur repräsentierende Linie abgebildet wird.

9. Verfahren nach Anspruch 2, **dadurch gekennzeichnet,**
**dass** das Verletzerfahrzeug in der Abbildung markiert wird, indem ein einen Winkelbereich repräsentierender Bereich abgebildet wird.

10. Verfahren nach Anspruch 1 oder 2, **dadurch gekennzeichnet,**
**dass** das Verletzerfahrzeug in der Abbildung markiert wird, indem ein einen Entfernungsbereich repräsentierendes Ringsegment abgebildet wird.

## Claims

1. Method of measuring the speed of a vehicle, in which
- a radar system (1) directs a radar beam at a road in such a manner that several vehicles at the same time can drive through a measuring range defined by the radar beam,
- a part of the radar beam is reflected by at least one vehicle,
- the reflected beam portion is compared to the radar beam directed at the road,
- measured values for the speed and the distance (E) from the radar system (1) linked to the vehicles are derived from the comparison,
- the derived speeds are compared to a maximum permissible speed,
- a camera is activated for the purpose of creating an image if a derived speed is higher than the maximum permissible speed, with the derived speed and the vehicle for which the excessive speed was derived being contained on the image,
- the measured values are continuously derived several times throughout the duration of the passage of the vehicles through the measuring range,
- the plausibility of previously measured values is assessed by means of subsequently derived measured values,
**characterized in that**
- the measured values for the distances (E) are used to characterize the vehicle traces of the reflecting vehicles relative to the distance from the radar system (1),
- the vehicle trace of the vehicle in the image, linked to the vehicle for which the excessive speed was derived, is marked.

2. Method of measuring the speed of a vehicle, in which
- a radar system (1) directs a radar beam at a road in such a manner that several vehicles at the same time can drive through a measuring range defined by the radar beam,
- a part of the radar beam is reflected by at least one vehicle,
- the reflected beam portion is compared to the radar beam directed at the road,
- measured values for the speed linked to the vehicles are derived from the comparison,
- the derived speeds are compared to a maximum permissible speed,
- a camera is activated for the purpose of creating an image if a derived speed is higher than the maximum permissible speed, with the derived speed and the vehicle for which the excessive speed was derived being contained on the image,
**characterized in that**
- in addition, measured values for measuring angles (γ) are derived,
- the measured values are continuously derived several times throughout the duration of the passage of the vehicles through the measuring range,
- the plausibility of previously measured values is assessed by means of subsequently derived measured values,
- the measured values for the measuring angles (γ) are used to characterize the vehicle traces of the reflecting vehicles relative to the main beam of the radar system (1),
- the vehicle trace of the vehicle in the image, linked to the vehicle for which the excessive speed was derived, is marked.

3. Method according to claim 1, **characterized in that** measured values for measuring angles (γ) are derived from the comparison and the measured values for the measuring angles (γ), which were derived several times, together with the measured values for the speed and the distance, which were derived at the same time, form a value triple by means of which the vehicle trace is determined relative to its location to the radar system (1).

4. Method according to claim 2, **characterized in that** measured values for distances are derived from the comparison and the measured values for the distance (E), which were derived several times, together with the measured values for the speed and the measuring angles (γ), which were derived at the same time, form a value triple by means of which the vehicle trace is determined relative to its location to the radar system (1).

5. Method according to claim 2 or 3, **characterized in that** the reflected beam portion is proportionately received by two radar antennas and the measuring angle (γ) is determined by way of distances (E) derived therefrom in different manners using the triangulation method.

6. Method according to one of claims 1 to 2, **characterized in that** measured values which are not confirmed as plausible are eliminated and are not used to characterize or determine the vehicle trace.

7. Method according to claim 3 or 5, **characterized in that** the characterization or determination of the individual vehicle traces takes place relative to their location to one another so as to be able to distinguish the vehicles.

8. Method according to claim 1 or 3, **characterized in that** the infringing vehicle is marked in the image **in that** a line representing the vehicle trace is shown in the image.

9. Method according to claim 2, **characterized in that** the infringing vehicle is marked in the image **in that** an area representing an angle range is shown in the image.

10. Method according to claim 1 or 2, **characterized in that** the infringing vehicle is marked in the image **in that** a circular segment representing a distance range is shown in the image.

## Revendications

1. Procédé de mesure de la vitesse d'un véhicule, dans lequel
- un système radar (1) dirige un faisceau radar sur une route de telle manière que plusieurs véhicules en même temps peuvent rouler à travers une zone de mesure définie par le faisceau radar,
- une partie du faisceau radar est réfléchie par au moins un véhicule,
- la partie de faisceau réfléchie est comparée au faisceau radar dirigé sur la route,
- des valeurs mesurées pour la vitesse et la distance (E) du système radar (1) associées aux véhicules sont dérivées de la comparaison,
- les vitesses dérivées sont comparées à une vitesse maximale autorisée,
- une caméra est activée pour créer une image si une vitesse dérivée est supérieure à la vitesse maximale autorisée, la vitesse dérivée et le véhicule pour lequel était dérivée la vitesse excessive étant contenus sur l'image,
- les valeurs mesurées sont dérivées de manière continue plusieurs fois pendant la durée du passage des véhicules à travers la zone de mesure,
- la plausibilité des valeurs précédemment mesurées est évaluée au moyen de valeurs mesurées dérivées subséquemment,
**caractérisé en ce que**
- les valeurs mesurées pour les distances (E) sont utilisées pour caractériser les traces de véhicule des véhicules réfléchissants par rapport à la distance du système radar (1),
- la trace de véhicule du véhicule sur l'image, associée au véhicule pour lequel était dérivée la vitesse excessive, est marquée.

2. Procédé de mesure de la vitesse d'un véhicule, dans lequel
- un système radar (1) dirige un faisceau radar sur une route de telle manière que plusieurs véhicules en même temps peuvent rouler à travers une zone de mesure définie par le faisceau radar,
- une partie du faisceau radar est réfléchie par au moins un véhicule,
- la partie de faisceau réfléchie est comparée au faisceau radar dirigé sur la route,
- des valeurs mesurées pour la vitesse associées aux véhicules sont dérivées de la comparaison,
- les vitesses dérivées sont comparées à une vitesse maximale autorisée,
- une caméra est activée pour créer une image si une vitesse dérivée est supérieure à la vitesse maximale autorisée, la vitesse dérivée et le véhicule pour lequel était dérivée la vitesse excessive étant contenus sur l'image,
**caractérisé en ce que**
- en plus, des valeurs mesurées pour des angles de mesure (γ) sont dérivées,
- les valeurs mesurées sont dérivées de manière continue plusieurs fois pendant la durée du passage des véhicules à travers la zone de mesure,
- la plausibilité des valeurs précédemment mesurées est évaluée au moyen de valeurs mesurées dérivées subséquemment,
- les valeurs mesurées pour les angles de mesure (γ) sont utilisées pour caractériser les traces de véhicule des véhicules réfléchissants relatif au faisceau principal du système radar (1),
- la trace de véhicule du véhicule sur l'image, associée au véhicule pour lequel était dérivée la vitesse excessive, est marquée.

3. Procédé selon la revendication 1, **caractérisé en ce que** des valeurs mesurées pour des angles de mesure (γ) sont dérivées de la comparaison et les valeurs mesurées pour les angles de mesure (γ), qui étaient dérivées plusieurs fois, conjointement avec les valeurs mesurées pour la vitesse et la distance, qui étaient dérivées en même temps, forment un triplet de valeurs au moyen desquelles la trace de véhicule est déterminée relatif à sa position par rapport au système radar (1).

4. Procédé selon la revendication 2, **caractérisé en ce que** des valeurs mesurées pour des distances sont dérivées de la comparaison et les valeurs mesurées pour la distance (E), qui étaient dérivées plusieurs fois, conjointement avec les valeurs mesurées pour la vitesse et les angles de mesure (γ), qui étaient dérivées en même temps, forment un triplet de valeurs au moyen desquelles la trace de véhicule est déterminée relatif à sa position par rapport au système radar (1).

5. Procédé selon la revendication 2 ou 3, **caractérisé en ce que** la partie de faisceau réfléchie est proportionnellement reçue par deux antennes radar et l'angle de mesure (γ) est déterminé par des distances (E) en dérivées de différentes manières en utilisant la méthode de triangulation.

6. Procédé selon une des revendications 1 à 2, **caractérisé en ce que** des valeurs mesurées qui ne sont pas confirmées comme plausible sont éliminées et ne sont pas utilisées pour caractériser ou déterminer la trace de véhicule.

7. Procédé selon la revendication 3 ou 5, **caractérisé en ce que** la caractérisation ou détermination des traces de véhicules individuelles a lieu relatif à leur position l'une par rapport à l'autre pour pouvoir distinguer les véhicules.

8. Procédé selon la revendication 1 ou 3, **caractérisé en ce que** le véhicule enfreignant est marqué sur l'image **en ce qu'**une ligne représentant la trace de véhicule est montrée sur l'image.

9. Procédé selon la revendication 2, **caractérisé en ce que** le véhicule enfreignant est marqué sur l'image **en ce qu'**une zone représentant une zone angulaire est montrée sur l'image.

10. Procédé selon la revendication 1 ou 2, **caractérisé en ce que** le véhicule enfreignant est marqué sur l'image **en ce qu'**un segment annulaire représentant une zone de distance est montré sur l'image.
